# EUROPÄISCHE PATENTANMELDUNG

(11) **EP 1 286 281 A1**
(43) Veröffentlichungstag der Anmeldung: **26.02.2003**
(21) Anmeldenummer: 01119508.8
(22) Anmeldetag: 14.08.2001
(51) Int. Cl.: G06F 17/60

(54) **Verfahren und Computersystem zur Qualitätssicherung insbesondere der Reinigung einer Anlage**

(71) Anmelder: Neumann & Neumann Projekt- und Beratungs GmbH, 82494 Krün (DE)
(72) Erfinder: Eva Neumann, 82494 Krün (DE); Oswald Neumann, 82494 Krün (DE)
(74) Vertreter: Flosdorff, Jürgen, Dr.

(57) **Zusammenfassung**

Das Verfahren zur Qualitätssicherung insbesondere der Reinigung einer Anlage sieht vor, daß auf einem Bildschirm mehrere Positionen der Anlage angezeigt werden, die sich jeweils in wenigstens zwei Zuständen befinden können, für die jeweils ein Feld angezeigt ist, daß auf Eingaben des Benutzers hin die die Zustände kennzeichnenden Felder markiert werden und daß nach Markierung der Felder aller Positionen diese Informationen an einen zentralen Rechner abgesandt werden. Das zugehörige Computersystem enthält bevorzugt einen Palm mit einem entsprechenden Softwaresystem.

## Beschreibung

Die Erfindung betrifft ein Verfahren zur Qualitätssicherung insbesondere der Reinigung einer Anlage wie beispielsweise der Räume eines Gebäudes, der Wagen einer Eisenbahn oder dergleichen sowie ein Computersystem, mit dem dieses Verfahren ausführbar ist. Das Verfahren ist aber auch zur Überprüfung anderer als durch eine Reinigung hervorgerufener Zustände anwendbar, beispielsweise durch Sicherungsdienste, die zu überprüfen haben, ob bestimmte Einrichtungen beispielsweise verschlossen oder in einem betriebsbereiten Zustand sind.

Die Erfindung wird nachfolgend im Zusammenhang mit der Qualitätssicherung und der damit ermöglichten Qualitätsverbesserung der Reinigung von Anlagen beschrieben.

In vielen Bereichen wie z.B. Bürogebäuden, Hotels, Krankenhäusern, Altenheimen etc. geht man zunehmend dazu über, die Reinigungsarbeiten nicht durch eigenes Personal, sondern durch einen selbständigen Auftragnehmer ausführen zu lassen. Dabei ergibt sich das Problem, daß die durchgeführten Arbeiten wirkungsvoll kontrolliert werden müssen, damit ein hoher Qualitätsstandard bei der Reinigung gewährleistet werden kann. Dies erfordert eine weitgehend objekte Bewertung der durchgeführten Arbeiten und eine schnelle Auswertung, damit die festgestellten Mängel umgehend behoben werden können.

Dies ist mit der bisher üblichen Vorgehensweise der reinen Augenscheinsnahme des Reinigungszustands einer Anlage nicht erreichbar.

Der vorliegenden Erfindung liegt die Aufgabe zugrunde, eine Lösung für das Problem der Qualitätssicherung und Qualitätssteigerung von in und/oder an einer Anlage durchgeführten Maßnahmen, insbesondere von Reinigungsvorgängen, anzugeben.

Diese Aufgabe wird erfindungsgemäß durch ein Verfahren mit den Merkmalen des Patentanspruchs 1 gelöst.

Ein erfindungsgemäßes Computersystem zur Durchführung des Verfahrens ist durch die Merkmale des Patentanspruchs 7 gekennzeichnet.

Vorteilhafte Ausgestaltungen der Erfindung ergeben sich aus den abhängigen Ansprüchen.

Das erfindungsgemäße Verfahren sieht vor, daß auf einem Bildschirm bzw. Anzeigefeld eines Rechners mehrere Positionen der Anlage angezeigt werden, die sich jeweils in wenigstens zwei Zuständen befinden können, für die jeweils ein Feld vorgesehen ist. Auf Eingaben des Benutzers hin werden die die angetroffenen Zustände kennzeichnenden Felder markiert, wobei nach Markierung der Felder aller Positionen diese Informationen an einen Empfänger, bevorzugt einen zentralen Rechner abgesandt werden.

Bei den jeweils wenigstens zwei Zuständen der einzelnen Positionen handelt es sich bevorzugt um einen mängelfreien und einen mangelhaften Zustand, wobei auch mehr als zwei Zustände für jede Position vorgesehen sein können.

Der von dem Benutzer mitgeführte Rechner ist vorzugsweise ein Palm, der aufgrund seiner kleinen Abmessungen bequem mitgeführt werden kann. Die Eingaben des Benutzers erfolgen durch Druck auf die Felder des Bildschirms bzw. Anzeigefeldes des Palms.

Weiter wird mit Vorteil vorgeschlagen, daß auf dem Bildschirm des Rechners außerdem das jeweilige Datum und die jeweilige Uhrzeit angezeigt werden, bei denen die Überprüfung bzw. Kontrolle erfolgt. Dies hat unter anderem den Vorteil, daß dokumentiert werden kann, wann sich der Benutzer -im Falle der Reinigung einer Anlage der Kontrolleur des Reinigungsvorgangs- an dem gereinigten Ort befunden hat.

Weiter wird vorgeschlagen, daß der zentrale Rechner die übersandten Informationen in der Form auswertet, daß er eine Mängelliste, die nur die beanstandeten Positionen enthält, und gegebenenfalls einen Qualitätsbericht erstellt. Die Mängelliste kann über das Sendersystem an einen PC am Standort der Untersuchung ausgedruckt werden.

Weiter wird mit großem Vorteil vorgeschlagen, daß jedem die Zustände der zu kontrollierenden Positionen bezeichnendem Feld in dem Softwaresystem eine vorgegebene Punktzahl zugeordnet ist und daß in einem weiteren Verfahrensschritt die bei dem jeweiligen kontrollierten Reinigungsvorgang erreichte Punktzahl addiert wird. Durch Vergleich mit der maximal erreichbaren Punktzahl läßt sich hochgradig objektiv die Qualität des Reinigungsvorganges ermitteln.

Weiter kann vorgesehen sein, daß mangelhafte Zustände einer oder mehrere Positionen, beispielsweise ein mangelhaft gereinigtes Waschbecken oder ein Bereich mit Spinnweben an einer Gebäudedecke durch eine elektronische Kamera erfaßt werden, die ebenfalls das zugehörige Datum und den Zeitpunkt der Aufnahme anzeigt.

Mit dem erfindungsgemäßen Verfahren ist eine sofortige Auswertung der festgestellten Zustände von bestimmten Positionen einer Anlage oder dergleichen ermöglicht, so daß umgehend eine Mängelliste erstellbar ist, auf deren Grundlage die Mängel schnell behoben werden können, so daß eine gegebenenfalls ausreichende Qualität gesichert oder eine unzureichende Qualität verbessert werden kann.

Das erfindungsgemäße Computersystem zur Qualitätsicherung insbesondere der Reinigung einer Anlage oder dergleichen enthält bevorzugt einen Palm, der aufgrund seiner geringen Größe bequem mitführbar und bedienbar ist, mit einem Softwaresystem, das auf dem Anzeigefeld bzw. Bildschirm des Palms mehrere Positionen der Anlage anzeigt, die sich jeweils in wenigstens zwei Zuständen befinden können, für die jeweils ein Feld angezeigt ist, wobei auf Eingaben des Benutzers hin die die Zustände kennzeichnenden Felder markiert werden und mit einem Sender, der die in den Palm eingegebenen Informationen an einen zentralen Rechner zur Auswertung übermittelt.

Mit dem erfindungsgemäßen Computersystem können beispielsweise die Abteile eines Schlafwagenzuges mit einem geringen Zeitaufwand daraufhin kontrolliert werden, ob alle Reinigungsvorgänge ausgeführt sind und alle wesentlichen Bestandteile wie z.B. Lampen in einem funktionsbereiten Zustand sind. Die in das Computersystem eingegebenen Daten werden umgehend ausgewertet, wobei eine Mängelliste erstellt werden kann, mit der die festgestellten Mängel umgehend behoben werden können. Bei Anwendung des erfindungsgemäßen Verfahrens läßt sich die Qualität beispielsweise eines Reinigungsvorgangs feststellen und auf dem gewünschten Niveau sichern.

## Patentansprüche

1. Verfahren zur Qualitätssicherung insbesondere der Reinigung einer Anlage, bei dem
- auf einem Bildschirm mehrere Positionen der Anlage angezeigt werden, die sich jeweils in wenigstens zwei Zuständen befinden können, für die jeweils ein Feld angezeigt ist,
- auf Eingaben des Benutzers hin die die Zustände kennzeichnenden Felder markiert werden,
- nach Markierung der Felder aller Positionen diese Informationen an einen zentralen Rechner abgesandt werden.

2. Verfahren nach Anspruch 1,
bei dem die wenigstens zwei Zustände ein mangelfreier und ein mangelhafter Zustand sind.

3. Verfahren nach Anspruch 1 oder 2,
bei dem außerdem das jeweilige Datum und die jeweilige Uhrzeit auf dem Bildschirm angezeigt werden.

4. Verfahren nach einem der Ansprüche 1 bis 3,
bei dem die Eingaben durch Druck auf den Bildschirm eines Palms erfolgen.

5. Verfahren nach einem der Ansprüche 1 bis 4,
bei dem mangelhafte Zustände durch eine elektronische Kamera erfaßt werden.

6. Verfahren nach einem der Ansprüche 1 bis 4,
bei dem jedem Feld eine Punktzahl zugeordnet ist und die erreichte Punktzahl addiert wird.

7. Computersystem zur Qualitätssicherung insbesondere der Reinigung einer Anlage, mit
- einem Palm mit einem Softwaresystem, das auf einem Bildschirm mehrere Positionen der Anlage anzeigt, die sich jeweils in wenigstens zwei Zuständen befinden können, für die jeweils ein Feld angezeigt ist, wobei auf Eingaben des Benutzers hin die die Zustände kennzeichnenden Felder markiert werden.

8. Computersstem nach Anspruch 7,
ferner mit einem Sender, der die in dem Palm gespeicherten Informationen an einen zentralen Rechner zur Auswertung übermittelt.
